# EUROPÄISCHE PATENTSCHRIFT

(11) **EP 0 954 973 B1**
(45) Veröffentlichungstag und Bekanntmachung des Hinweises auf die Patenterteilung: **03.07.2002**
(21) Anmeldenummer: 99107937.7
(22) Anmeldetag: 22.04.1999
(51) Int. Cl.: A21C 13/02

(54) **Gärschrank mit Entkeimungsanlage**
Proofing chamber with disinfection facility
Chambre de fermentation avec installation de désinfection

(30) Priorität: 06.05.1998 DE 19820062
(43) Veröffentlichungstag der Anmeldung: 10.11.1999
(73) Patentinhaber: Werner & Pfleiderer Lebensmitteltechnik GmbH, 91550 Dinkelsbühl (DE)
(72) Erfinder: Knost, Dieter, 49086 Osnabrück (DE)
(74) Vertreter: Rau, Albrecht

(56) Entgegenhaltungen:
- AT-B- 354 376
- DE-A- 3 712 372
- DE-A- 19 518 415
- FR-A- 2 222 831
- US-A- 1 420 102
- US-A- 1 716 460
- US-A- 3 518 949
- US-A- 4 023 476

## Beschreibung

Die Erfindung betrifft einen Gärschrank gemäß dem Oberbegriff des Anspruches 1.

Bei der Herstellung von Brötchen und Broten wird fertig gekneteter Teig, bevor er in Form von Teiglingen einem Ofen zum Backen zugeführt wird, zum Gären stehengelassen. Hierfür sind Gärschränke bekannt, in denen der Teig zu Teiglingen geformt wird und zum Gären eine bestimmte Zeit in einem Gärraum verweilt. Bereits nach relativ kurzer Betriebsdauer tritt in diesen Gärschränken das Problem der Schwarzschimmelbildung auf. Dabei entsteht der Schimmelpilzbefall insbesondere an den Stellen, an denen die Brötchen- bzw. Brotteiglinge während der Gärzeit sitzen. Betroffen sind in den Brötchenanlagen die sogenannten, meist mit Filz ausgeschlagenen, Gehänge. In den Brotgärschränken sind es die mit Tuch oder Filz bespannten Dielen bzw. Körbchen.

Die Schimmelpilzsporen werden über das Mehl und die angesaugte Backstubenluft in die Gärschränke eingetragen und bilden bei entsprechender Anzahl in dem feuchtwarmen Klima der Gärschränke schnell die typischen und sehr ausgeprägten Schimmelpilzflecken. Vom Schwarzschimmel befallene Anlagen werden in der Regel durch die zuständigen Aufsichtsbehörden stillgelegt. Die nachträgliche Entfernung des Schwarzschimmels läßt sich meist nicht auf einfachem Wege realisieren und erfordert im Regelfall den Austausch der Gärgutträger.

Zur Verhinderung von Schwarzschimmelbefall sind einige Verfahren bekannt, deren Wirkung aber in jedem Fall unbefriedigend ist.

Bei der sogenannten Bestrahlungsmethode werden die leeren Gehänge bzw. Körbchen an einer UV- oder Gammastrahlen-Quelle vorbeigeführt. Sie verweilen eine gewisse Zeitdauer im Strahlungsbereich oder werden im Rundlaufprinzip für einen längeren Zeitraum immer wieder an dieser Strahlungsquelle vorbeigeführt. Meistens wird dieses System zusammen mit einer Gehängetrocknung verwendet, bei der die Restfeuchte der Gehänge mit einem Warmluftventilator getrocknet wird. Die Strahlungsmethode erreicht jedoch keinen hohen Wirkungsgrad, weil nur die Oberschicht des sporenbehafteten Rückstands in den Gehängen bzw. auf den Dielen bestrahlt werden kann. Auch bei längerer Einwirkungszeit kann eine Tiefenwirkung nicht erreicht werden. Somit bleibt das Potential zur Schwarzschimmelbildung erhalten, wobei die Schimmelbildung lediglich über eine Verringerung der Gesamtsporenzahl hinausgezögert werden kann.

Bei der Methode der sogenannten adiabatischen Luftwäsche wird die in der Gäranlage umgewälzte Luft über eine adiabatische Reinigungseinrichtung geführt. Auf diese Weise werden die Pilze aus der Umwälzluft hinausgefiltert. Die Gesamtsporenzahl wird dadurch reduziert. Nachdem aber bereits die einzelnen Teiglinge beim Eintritt in die Gäranlage sporenbehaftet sind, die Schimmelpilzsporen also sowohl über das Gärgut selbst, wie auch über die zugeführte Luft in den Gärschrank gelangen, kann mit der Luftwäsche nur ein Teilerfolg erzielt werden. Die Bildung von Schwarzschimmel kann auf diese Weise auch nur hinausgeschoben, nicht aber verhindert werden.

Ferner sind waschbare Gärgutträger bzw. waschbare Gehänge- oder Dielenbespannungen bekannt, die im Regelfall aus Filz oder Baumwollgeweben bestehen. Eine derartige waschbare Einlage kann jedoch durchschnittlich nur 2 bis 3 Reinigungsprozesse überstehen, bevor sie durch die typische Schrumpfung beim Waschvorgang unbrauchbar wird. Da aus diesem Grund präventive Reinigungen unüblich sind, wird der Reinigungsvorgang in der Regel erst durchgeführt, wenn der erste Schimmelbefall sichtbar ist. Mit den heute üblichen Wasch- und Bleichmitteln kann der Schimmelfleck jedoch nicht vollständig entfernt werden, so daß das Gehänge unansehnlich bleibt. Darüber hinaus ist das Entfernen der einzelnen Gehänge zeit- und kostenaufwendig.

Aus der FR 2 222 831 ist ein Gärschrank mit einer Gäreinheit bekannt, in der Teiglinge bei 5 bis 30°C gegärt werden. Der Gäreinheit ist eine Trockeneinheit nachgeordnet, die zum Trocknen von Aufnahmebehältern für Teiglinge dient. In dieser Trockeneinheit herrscht eine Temperatur, die ein Trocknen der Aufnahmebehälter erlaubt. Nachteilig bei diesem Gärschrank ist allerdings, daß sich Schimmelpilzsporen in dem Gärschrank an den einzelnen Komponenten nach einem längeren Betrieb bilden. Die Entfernung des Schimmels läßt sich nicht auf einfache Weise realisieren.

Aus der US 4,023,476 ist ein Gärschrank bekannt, der eine Gäreinheit mit einer zentralen Wärmequelle aufweist. Auf die in der Gäreinheit vorliegende Temperatur wird in dieser Druckschrift nicht eingegangen. Des weiteren wird die Problematik der Schimmelpilzbildung nicht angesprochen. In dieser Druckschrift wird lediglich offenbart, daß der Gärschrank einfach zu reinigen ist, da Lüfter der Gäreinheit seitlich aus einer Türe herausgeschoben werden können. Die Reinigung dieses Gärschranks erfordert somit einen gewissen Arbeitsaufwand, der einer wirtschaftlichen Teiglings-Produktion entgegensteht.

Es ist deshalb Aufgabe der vorliegenden Erfindung, einen Gärschrank bereitzustellen, dessen Schimmelpilzbefall in möglichst einfacher Weise nachhaltig verhindert werden kann.

Die Aufgabe wird durch den kennzeichnenden Teil des Anspruchs 1 gelöst.

Die Erfindung weist den Vorteil auf, daß durch die Erwärmung zumindest eines Teils der Gäreinheit auf eine Temperatur, die oberhalb der Überlebenstemperatur von Schimmelpilzsporen liegt, die vorhandenen Schimmelpilzsporen vollständig abgetötet werden können. Eine Beeinträchtigung der Materialien der Aufnahmebehälter durch Reinigungsmittel oder Strahlung tritt nicht ein. Die Erwärmung kann außerhalb der normalen Betriebszeit des Gärschrankes erfolgen und beeinträchtigt somit seine Einsetzbarkeit im normalen Produktionsprozeß nicht. Der Entkeimungsprozeß kann automatisch durchgeführt werden und erfordert keine zeitaufwendigen manuellen Eingriffe in den Gärschrank. Er ist somit auch kostensparend.

Es kann das in einem erfindungsgemäßen Gärschrank vorhandene Klimagerät zur Erwärmung der Gäreinheit auf die vorgegebene Temperatur verwendet werden. Eine zusätzliche Heizung ist deshalb nicht erforderlich.

Wird gemäß Anspruch 4 durch das Heizmodul der gesamte Innenraum der Gäreinheit auf die vorgegebene Temperatur erwärmt, so werden alle in der Gäreinheit befindlichen Schimmelpilzsporen zerstört. Somit sind auch Sporen, die sich an entlegeneren Stellen, wie z.B. den Lagern der Kettenstränge befinden, erfaßt.

Ein räumlich getrenntes Heizmodul gemäß Anspruch 5 vorzusehen, hat den Vorteil, daß aufgrund des geringeren zu erwärmenden Raumes weniger Energie benötigt wird. Außerdem können bereits existierende Gärschränke mit einem zusätzlichen außen angebrachten Heizmodul nachgerüstet werden und somit vor zukünftigem Pilzbefall geschützt werden. Darüber hinaus ist die Wartung eines räumlich getrennten Heizmoduls einfacher.

Die Verwendung einer isolierenden Zwischenwand gemäß Anspruch 7 zwischen dem Heizmodul und dem Gärraum trägt ferner dazu bei, daß für die Erwärmung auf die vorgegebene Temperatur weniger Energie verwendet werden muß, da der Energieabfluß an die Umgebung geringer ist.

Weitere Merkmale, Einzelheiten und Vorteile der Erfindung ergeben sich aus der nachfolgenden Beschreibung dreier Ausführungsbeispiele anhand der Zeichnung. Es zeigen
- Fig. 1: einen vertikalen Schnitt durch einen Gärschrank gemäß einer ersten Ausführungsform,
- Fig. 2: einen vertikalen Schnitt durch einen Gärschrank gemäß einer zweiten Ausführungsform und
- Fig. 3: einen vertikalen Schnitt durch einen Gärschrank gemäß einer dritten Ausführungsform.

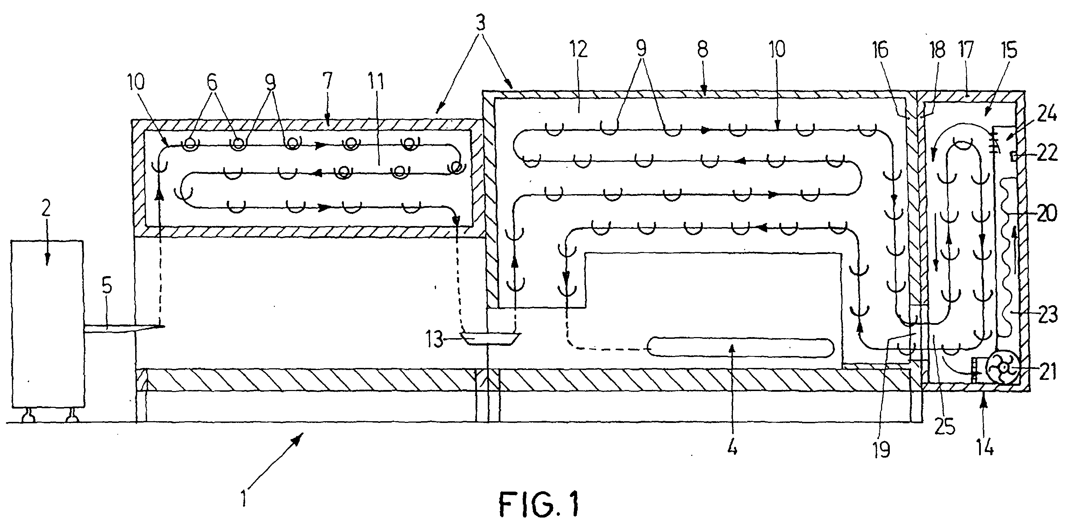

Gemäß einer ersten in Fig. 1 dargestellten Ausführungsform weist ein Gärschrank 1 eine Teig-Zuführ-Einheit 2, eine damit verbundene Gäreinheit 3 und eine mit dieser verbundene Teiglings-Ausgabe-Einheit 4 auf. Die Teig-Zuführ-Einheit 2 übergibt fertig gekneteten Teig über ein Band 5 an die Gäreinheit 3. Nach Beendigung des Gärprozesses in der Gäreinheit 3 werden Teiglinge 6 zur weiteren nachfolgenden Verarbeitung, insbesondere zum Backen, an die Teiglings-Ausgabe-Einheit 4 gegeben.

Die Gäreinheit 3 weist eine Vorgäreinheit 7 und eine Nachgäreinheit 8 auf. Es kann jedoch auch nur eine von beiden vorgesehen sein. Die Vorgäreinheit 7 und Nachgäreinheit 8 weisen die für Gärschränke typischen Elemente zur Teigbearbeitung, Teigbehandlung, Temperatur- und Luftfeuchtigkeitsführung etc. auf, die in Fig. 1 nicht dargestellt sind. Die Teiglinge 6 werden in Aufnahmebehältern 9 aufgenommen, welche an zwei endlosen Kettensträngen 10 befestigt durch den sich in der Vorgäreinheit 7 befindenden Vorgärraum 11 und sich in der Nachgäreinheit 8 befindenden Nachgärraum 12 geführt werden. Die Führung des Kettenstranges 10 erfolgt entlang mäanderförmiger Schleifen durch den Vorgärraum 11 und Nachgärraum 12. Die Übergabe der Teiglinge 6 von der Vorgäreinheit 7 an die Nachgäreinheit 8 erfolgt über ein Band 13, das zwischen beiden angeordnet ist. Ein Aufnahmebehälterwechsel ist in der Regel erforderlich, da die Teiglinge schwitzen und deshalb deren Plazierung in einem neuen Aufnahmebehälter 9 erforderlich ist. Es ist jedoch auch möglich, in der Vorgäreinheit 7 und Nachgäreinheit 8 durchgehende Kettenstränge 10 anzuordnen.

Die Aufnahmebehälter 9 sind im Fall von Brötchenteiglingen als Gehänge und im Fall von Brotteiglingen als Körbchen oder Dielen ausgebildet. Um die beim Gären austretende Feuchtigkeit zu absorbieren und ein Anhaften der Teiglinge 6 an der Grundfläche der Aufnahmebehälter 9 zu verhindern, sind diese mit Tuch oder Filz bespannt bzw. ausgeschlagen.

In der Gäreinheit 3 ist eine Entkeimungs-Einheit 14 zur Vernichtung von in der Gäreinheit 3 befindlichen Schimmelpilzsporen vorgesehen. Die Schimmelpilzsporen gelangen mit den Teiglingen und dem daran haftenden Mehl und der aus der Backstube eingesaugten Luft in die Gäreinheit 3. Die Entkeimungs-Einheit 14 weist ein Heizmodul 15 auf, welches an einer Seitenwand 16 der Nachgäreinheit 8 mit dieser verbunden angeordnet ist. Das Heizmodul 15 ist von einem thermisch isolierenden Gehäuse 17 umschlossen, dessen eine Gehäusewand 18 an die Seitenwand 16 angrenzt und mit dieser verbunden ist. Zwischen Nachgäreinheit 8 und Heizmodul 15 ist eine wahlweise verschließbare Öffnung 19 vorgesehen, durch die die mit dem Kettenstrang 10 verbundenen Aufnahmebehälter 9 von der Nachgäreinheit 8 in die Entkeimungs-Einheit 14 geführt werden.

Das Heizmodul 15 weist zur Erwärmung der Innenraumluft Heizstäbe 20 und zur Erzeugung von Umwälzluft ein Gebläse 21 auf. Hierdurch kann ein Umluftstrom im Heizmodul 15 erzeugt werden, wie er mit Pfeilen in Fig. 1 angedeutet ist. Die Lufttemperatur des Heizmoduls 15 wird mittels eines Temperaturreglers 22 eingestellt.

Das Heizmodul 15 kann jedoch auch derart ausgebildet sein, daß es den Vorgärraum 11 und den Nachgärraum 12 mit den darin befindlichen Aufnahmebehältern 9 erwärmt. Ferner ist es möglich, mittels des Heizmoduls 15 die gesamte Vorgäreinheit 7 und Nachgäreinheit 8 zu erwärmen. Hierzu wäre das Heizmodul 15 unmittelbar innerhalb der Vorgäreinheit 7 oder Nachgäreinheit 8 angeordnet.

Neben dem in Fig. 1 gezeigten, aus Gebläse 21, Heizstab 20, Temperaturregler 22 und Luftführungsschacht 23 bestehenden Umwälzluftwärmetauscher 24 ist auch die Verwendung von Heizstrahlern möglich, welche in Fig. 1 nicht gezeigt sind. Ferner ist es möglich, das normalerweise in einem Gärschrank vorhandene Klimagerät, welches der Erwärmung bzw. Kühlung der Innenluft dient, als Heizmodul 15 zu verwenden.

Beim Betrieb der Entkeimungseinheit 14 erwärmt das Heizmodul 15 die im Innenraum 25 des Heizmoduls 15 befindlichen Aufnahmebehälter 9 und Elemente der Kettenstränge 10. Zur Erwärmung wird Luft durch das Gebläse 21 in die in Fig. 1 unteren Öffnungen des Luftführungsschachtes 23 gesaugt und durch das Vorbeistreichen an den Heizstäben 20 erwärmt. Die heiße Luft tritt am in Fig. 1 oberen Ende des Luftführungsschachtes 23 in den Innenraum 25 aus und gelangt mit den zu erwärmenden Aufnahmebehältern 9 in Kontakt. Die Geschwindigkeit, mit der die Aufnahmebehälter 9 transportiert werden und die durch den Heißluftstrom auf die Aufnahmebehälter 9 übertragene Energie sind so gewählt, daß die Aufnahmebehälter 9 vor Verlassen des Heizmoduls 15 vollständig auf die Temperatur erwärmt worden sind, bei der ein Überleben von Schimmelpilzsporen nicht mehr möglich ist. Die Stärke des Heißluftstroms sowie dessen Temperatur und die Fördergeschwindigkeit der Aufnahmebehälter müssen empirisch ermittelt werden.

Experimente haben ergeben, daß die in der Regel problematischen Schimmelpilzsporen, wie Cladosporium und Alternaria, bei Temperaturen von 55 bis 60 °C absterben. Das Heizmodul 15 ist deshalb derart ausgebildet, daß es die in seinem Innenraum 25 befindlichen Aufnahmebehälter 9 auf eine Temperatur von nicht weniger als 65 °C erwärmt. Die Temperatur kann selbstverständlich in Abhängigkeit der Schimmelpilzsporen geändert werden. Ist die Wärmeleistung des Umwälzluftwärmetauschers 24 nicht genügend, so werden die Aufnahmebehälter 9 taktweise in den Innenraum 25 eingefahren und verbleiben dort, bis sie die vorbestimmte Temperatur erreicht haben. Anschließend wird der nächste Abschnitt von Aufnahmebehältern 9 in den Innenraum 25 geführt. Dies wird fortgesetzt, bis alle Aufnahmebehälter 9 auf die vorgegebene Temperatur erhitzt worden sind.

Der Erwärmungsprozeß, der ohne Teiglinge 6 in den Aufnahmebehältern 9 stattfindet, muß in regelmäßigen Intervallen wiederholt werden, da durch die Teiglinge 6 und die Umgebungsluft ein erneuter Eintrag von Schimmelpilzsporen erfolgt. Im Alltag genügt eine Wiederholung alle 3 bis 4 Wochen. Die wiederholte Entkeimungsprozedur kann automatisch zeitgesteuert in produktionsfreien Zeiten erfolgen. Sie beeinträchtigt deshalb den normalen Produktionszyklus von Backwaren nicht.

In einer anderen, in Fig. 1 nicht gezeigten Ausführungsform ist, wie oben erwähnt, das Heizmodul 15 im Vorgärraum 11 oder Nachgärraum 12 angeordnet. Zur Entkeimung erwärmt das Heizmodul 15 den gesamten Innenraum der Vorgäreinheit 7 bzw. Nachgäreinheit 8 auf die vorgegebene Temperatur. Dies hat den Vorteil, daß auch Pilzsporen von der Entkeimungsprozedur erfaßt werden, die in den Lagern des Kettenstranges 10 und den anderen Bearbeitungselementen des Gärschranks 1 vorhanden sind. Hierfür ist jedoch ein erheblich höherer Energieeinsatz erforderlich, da das zu erwärmende Volumen sehr viel größer ist und die Vorgäreinheit 7 und Nachgäreinheit 8 in der Regel nicht zur Umgebung thermisch isoliert sind. Da die Teiglinge 6 primär mit den Aufnahmebehältern 9 in physischen Kontakt kommen und dort für den größten Teil der Zeit verweilen, genügt in der Regel zur Entkeimung die in Fig. 1 gezeigte Anordnung.

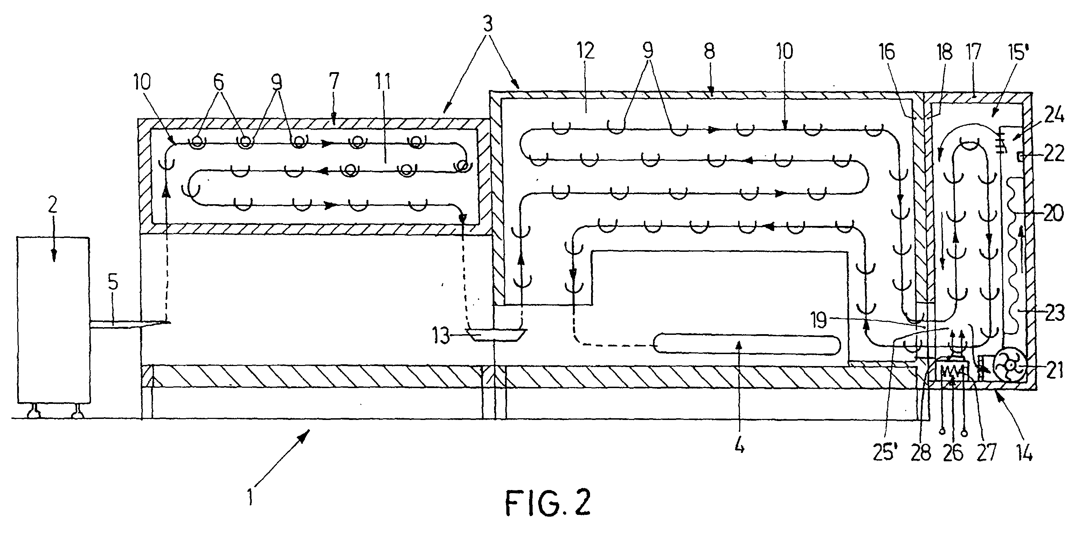

Im folgenden wird unter Bezugnahme auf Fig. 2 eine zweite Ausführungsform der Erfindung beschrieben. Identische Teile erhalten dieselben Bezugszeichen wie bei der ersten Ausführungsform, jedoch erhalten funktionell gleichartige, aber konstruktiv unterschiedliche Teile dieselben Bezugszeichen mit einem hochgesetzten Strich. Ansonsten wird auf die Beschreibung des ersten Ausführungsbeispiels verwiesen. Der wesentliche Unterschied gegenüber der ersten Ausführungsform besteht darin, daß im Heizmodul 15' eine Dampferzeugungs-Einheit 26 zur Abgabe von Wasserdampf an den Innenraum 25' des Heizmoduls 15' vorgesehen ist. Es können auch andere geeignete verdampfbare Medien außer Wasser verwendet werden. Als Dampferzeugungs-Einheit 26 können herkömmliche, auf dem Markt erhältliche Geräte verwendet werden. Die Dampferzeugungs-Einheit 26 weist eine elektrische Heizwendel 27 auf, auf der von außen zugeführtes Wasser verdampft wird, welches durch eine Öffnung 28 in den Innenraum 25' des Heizmoduls 15 austritt. Es kann auch überhitzter Wasserdampf verwendet werden.

Beim Betrieb der Entkeimungs-Einheit 14' sorgt der Wasserdampf dafür, daß aufgrund der im Vergleich zu Luft sehr viel höheren Wärmekapazität von Wasserdampf und der bei der Kondensation freiwerdenden hohen Kondensationsenergien im Vergleich zur ersten Ausführungsform sehr viel höhere Energien an die Aufnahmebehälter 9 und die dort häufig unter einer dickeren Mehlschicht sitzenden Schimmelpilzsporen abgegeben werden. Der Wirkungsgrad der Entkeimungs-Einheit 14' steigt somit. Das gegebenenfalls an den im Heizmodul 15' erwärmten Aufnahmebehältern 9 kondensierte Wasser kann durch Belüftung des Nachgärraums 12 durch Verdunstung entfernt werden.

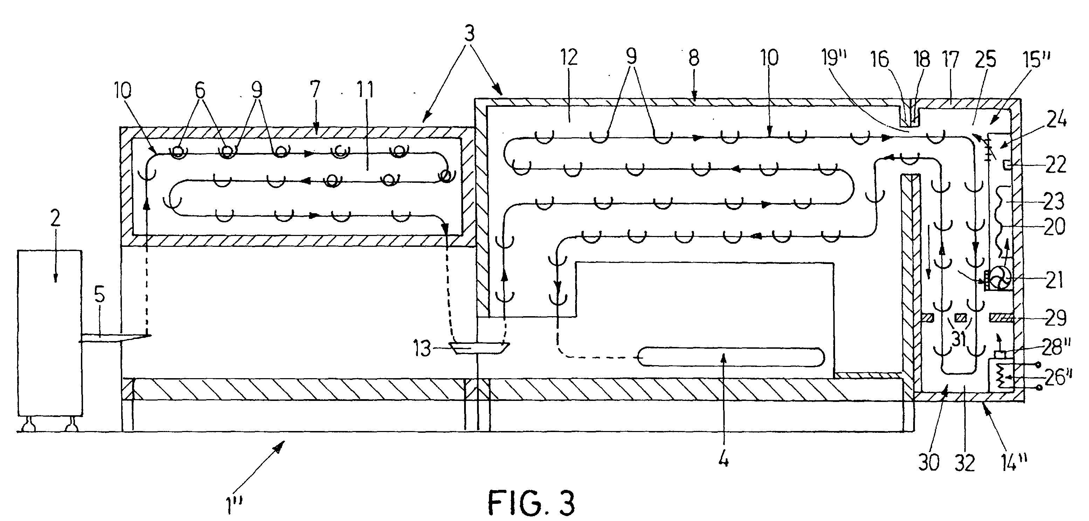

Im folgenden wird unter Bezugnahme auf Fig. 3 eine dritte Ausführungsform der Erfindung beschrieben. Identische Teile erhalten dieselben Bezugszeichen wie bei der ersten Ausführungsform; konstruktiv unterschiedliche, jedoch funktionell gleichartige Teile werden mit denselben Bezugszeichen mit zwei hochgesetzten Strichen versehen. Ansonsten wird auf die Beschreibung des ersten Ausführungsbeispiels verwiesen.

Die Entkeimungs-Einheit 14" weist ein durch eine isolierende Trennwand 29 getrenntes, unterhalb des Heizmoduls 15" angeordnetes Dampfmodul 30 auf. In der Trennwand 29 sind schleusenartig ausgebildete Passier-Öffnungen 31 vorgesehen, durch die die Aufnahmebehälter 9 an dem Kettenstrang 10 in das Dampfmodul 30 hinein und aus diesem heraus geführt werden. In dem Dampfmodul 30 ist eine Dampferzeugungs-Einheit 26" vorgesehen, die heißen, insbesondere übersättigten, Wasserdampf an den Innenraum 32 des Dampfmoduls 30 durch eine Austrittsöffnung 28" abgibt.

Beim Betrieb der Entkeimungs-Einheit 14" werden die mit Schimmelpilzsporen kontaminierten Aufnahmebehälter 9 zunächst durch das Heizmodul 15" geführt und dort auf eine zur Bekämpfung der Schimmelpilzsporen erforderliche Temperatur von über 65 °C erwärmt. Anschließend werden die Aufnahmebehälter 9 in das Dampfmodul 30 geführt und dort mit heißem, gesättigtem und gegebenenfalls überhitzten Wasserdampf beaufschlagt. Durch die im Vergleich zu Luft sehr viel größeren aufgebrachten Energien werden Schimmelpilzsporen auch unter dickeren Mehlkrusten abgetötet. Anschließend werden die Aufnahmebehälter wieder durch das Heizmodul 15 geführt und dort von kondensiertem Wasserdampf getrocknet, so daß bei einer erneuten Beschickung der Aufnahmebehälter 9 mit Teiglingen 6 diese nicht an den Aufnahmebehältern 9 ankleben. Durch die Anordnung des Dampfmoduls 30 unterhalb des Heizmoduls 15" wird sichergestellt, daß sich die Heißluft des Heizmoduls 15" und der Wasserdampf des Dampfmoduls 30 möglichst wenig vermischen, da Wasserdampf eine größere Dichte als Luft besitzt und somit nach unten sinkt.

## Patentansprüche

1. Gärschrank (1; 1'; 1") zum Gären von Teiglingen (6), umfassend
a) eine Teig-Zuführ-Einheit (2) zur Zuführung von Teig,
b) eine Gäreinheit (3), welche derart ausgebildet ist, daß sie
- Teig von der Teig-Zufuhr-Einheit (2) aufnimmt, und
- mindestens einen Gärraum (11, 12) aufweist, in dem Teiglinge (6) zum Gären eine vorbestimmte Zeit verweilen, und
c) eine Teiglings-Ausgabe-Einheit (4) zur Aufnahme von fertiggegorenen Teiglingen (6) von der Gäreinheit (3) und zur Ausgabe der Teiglinge (6) zur weiteren Verarbeitung, **dadurch gekennzeichnet, daß**
d) eine Entkeimungs-Einheit (14; 14'; 14") zur Vernichtung von in der Gäreinheit (3) befindlichen Schimmelpilzsporen vorgesehen ist, und
e) die Entkeimungs-Einheit (14; 14'; 14") ein Heizmodul (15; 15'; 15") aufweist, das derart ausgebildet ist, daß es mindestens einen Teil der Gäreinheit (3) für eine vorbestimmte Zeit auf eine Temperatur erwärmt, die oberhalb der Überlebenstemperatur der Schimmelpilzsporen liegt.

2. Gärschrank (1; 1'; 1") nach Anspruch 1, wobei das Heizmodul (15; 15'; 15") einen Heizstrahler und/oder einen Umwälzluftwärmetauscher (24) aufweist.

3. Gärschrank (1; 1'; 1") nach Anspruch 1 oder 2, wobei die Gäreinheit (3) Aufnahmebehälter (9) zur Bewegung der Teiglinge (6) durch die Gäreinheit (3) aufweist.

4. Gärschrank (1; 1'; 1") nach einem der vorangehenden Ansprüche, wobei das Heizmodul (15; 15'; 15") derart ausgebildet ist, daß es den gesamten Innenraum der Gäreinheit (3) auf eine Temperatur erwärmt, die oberhalb der Überlebenstemperatur der Schimmelpilzporen liegt.

5. Gärschrank (1; 1'; 1") nach einem der Ansprüche 1 bis 3, wobei das Heizmodul (15; 15'; 15") von dem Gärraum (11, 12) räumlich getrennt ist.

6. Gärschrank (1; 1'; 1") nach Anspruch 5, wobei die Aufnahmebehälter (9) durch das Heizmodul (15; 15'; 15") führbar und auf die vorbestimmte Temperatur erwärmbar sind.

7. Gärschrank (1; 1'; 1") nach einem der Ansprüche 5 oder 6, wobei das Heizmodul (15; 15'; 15") vom Gärraum (11, 12) durch eine isolierende Zwischenwand (16, 18) getrennt ist.

8. Gärschrank (1'; 1") nach einem der vorangehenden Ansprüche, **dadurch gekennzeichnet, daß** die Entkeimungs-Einheit (14'; 14") eine Dampferzeugungs-Einheit (26; 26") zur Erzeugung von Wasserdampf aufweist.

9. Gärschrank (1") nach Anspruch 8, **dadurch gekennzeichnet, daß** die Entkeimungs-Einheit (14") ein von dem Heizmodul (15") räumlich getrenntes Dampfmodul (30) aufweist, in welchem die Dampferzeugungs-Einheit (26") angeordnet ist.

## Claims

1. A proofing chamber (1; 1'; 1") for proofing dough pieces (6), comprising
a) a dough feed unit (2) for the supply of dough;
b) a proofing unit (3), which is configured for
- receiving dough from the dough feed unit (2) and
- having at least one proofing space (11, 12) where the dough pieces (6) dwell for proofing for a given time; and
c) a dough piece discharge unit (4) for taking up proofed dough pieces (6) from the proofing unit (3) and discharging the dough pieces (6) for further treatment; **characterized**
d) **in that** a disinfection unit (14; 14'; 14") is provided for extermination of mold spores in the proofing unit (3); and
e) **in that** the disinfection unit (14; 14'; 14") has a heating module (15; 15'; 15"), which is configured for heating at least part of the proofing unit (3) for a given time to a temperature above the survival temperature of the mold spores.

2. A proofing chamber (1; 1'; 1") according to claim 1, wherein the heating module (15; 15'; 15") comprises a heater-reflector and/or a circulating-air heat exchanger (24).

3. A proofing chamber (1; 1'; 1") according to claim 1 or 2, wherein the proofing unit (3) comprises containers (9) moving the dough pieces (6) through the proofing unit (3).

4. A proofing chamber (1; 1'; 1") according to one of the preceding claims, wherein the heating module (15; 15'; 15") is configured for heating the entire interior of the proofing unit (3) to a temperature above the survival temperature of the mold spores.

5. A proofing chamber (1; 1'; 1") according to one of claims 1 to 3, wherein the heating module (15; 15'; 15") is spatially separated from the proofing space (11, 12).

6. A proofing chamber (1; 1'; 1") according to claim 5, wherein the containers (9) are guided through the heating module (15; 15'; 15") and heated to the given temperature.

7. A proofing chamber (1; 1'; 1") according to one of claims 5 or 6, wherein the heating module (15; 15'; 15") is separated from the proofing space (11, 12) by an insulating intermediate wall (16, 18).

8. A proofing chamber (1'; 1") according to one of the preceding claims, **characterized in that** the disinfection unit (14'; 14") comprises a steam raising unit (26; 26") for the generation of steam.

9. A proofing chamber (1") according to claim 8, **characterized in that** the disinfection unit (14") comprises a steam module (30), which is spatially separated from the heating module (15") and in which the steam raising unit (26") is arranged.

## Revendications

1. Chambre de fermentation (1; 1'; 1") pour la fermentation de pâtons (6), comportant
a) une unité d'alimentation en pâte (2) pour l'amenage de pâte;
b) une unité de fermentation (3), qui est configurée
- pour prendre la pâte de l'unité d'alimentation en pâte (2) et
- pour comprendre au moins un espace de fermentation (11, 12), dans lequel les pâtons (6) restent pour fermenter pendant une période fixée à l'avance; et
c) une unité de déchargement de pâtons (4) pour la prise de pâtons (6) fermentés de l'unité de fermentation (3) et pour le déchargement des pâtons (6) pour la continuation de traitement; **caractérisée**
d) **en ce qu'** une unité de désinfection (14, 14'; 14") est prévue pour l'extermination de spores de moisissure qui se trouvent dans l'unité de fermentation (3); et
e) **en ce que** l'unité de désinfection (14; 14'; 14") comporte un module de chauffage (15; 15', 15") qui est configuré pour chauffer au moins une partie de l'unité de fermentation (3) pendant une période fixée à l'avance à une température au-delà de la température de survie des spores de moisissure.

2. Chambre de fermentation (1; 1'; 1") selon la revendication 1, dans laquelle le module de chauffage (15; 15'; 15") comporte un radiateur chauffant et/ou un échangeur thermique de circulation (24).

3. Chambre de fermentation (1; 1'; 1") selon la revendication 1 ou 2, dans laquelle l'unité de fermentation (3) comporte des récipients (9) pour le mouvement des pâtons (6) à travers l'unité de fermentation (3).

4. Chambre de fermentation (1; 1'; 1") selon l'une quelconque des revendications précédentes, dans laquelle le module de chauffage (15; 15'; 15") est configuré pour chauffer l'intérieur entier de l'unité de fermentation (3) à une température au-delà de la température de survie des spores de moisissure.

5. Chambre de fermentation (1; 1'; 1") selon l'une quelconque des revendications 1 à 3, dans laquelle le module de chauffage (15; 15'; 15") est séparé de l'espace de fermentation (11, 12).

6. Chambre de fermentation (1; 1'; 1") selon la revendication 5, dans laquelle les récipients (9) sont guidés à travers le module de chauffage (15; 15'; 15") et chauffés à la température fixée à l'avance.

7. Chambre de fermentation (1; 1'; 1") selon l'une quelconque des revendications 5 ou 6, dans laquelle le module de chauffage (15; 15'; 15") est séparé de l'espace de fermentation (11, 12) par une cloison isolante (16, 18).

8. Chambre de fermentation (1'; 1") selon l'une quelconque des revendications précédentes, **caractérisée en ce que** l'unité de désinfection (14'; 14") comporte une unité génératrice de vapeur pour la génération de vapeur.

9. Chambre de fermentation (1") selon la revendication 8, **caractérisée en ce que** l'unité de désinfection (14") comporte un module de vapeur (30) qui est séparé du module de chauffage (15") et dans lequel se trouve l'unité génératrice de vapeur (26").
